# FASCICULE DE BREVET EUROPEEN

(11) **EP 3 630 570 B1**
(45) Date de publication et mention de la délivrance du brevet: **24.03.2021**
(21) Numéro de dépôt: 18724165.8
(22) Date de dépôt: 03.05.2018
(51) Int. Cl.: G06K 9/62, B60W 40/04, B60W 50/14, G06K 9/00, G08G 1/0962

(54) **ASSISTANCE A LA CONDUITE D'UN VEHICULE AUTOMOBILE A L'APPROCHE D'UNE BARRIERE DE PEAGE**
UNTERSTÜTZUNG DES FAHRENS EINES KRAFTFAHRZEUGES BEI DER ANNÄHERUNG AN EINE MAUTSTELLE
ASSISTING THE DRIVING OF AN AUTOMOTIVE VEHICLE ON THE APPROACH TO A TOLL BARRIER

(30) Priorité: 29.05.2017 FR 1754694
(43) Date de publication de la demande: 08.04.2020
(73) Titulaire: Valeo Schalter und Sensoren GmbH, 74321 Bietigheim-Bissingen (DE)
(72) Inventeur: HEITZMANN, Thomas, 93012 Bobigny (FR); BRADAI, Benazouz, 93012 Bobigny (FR)
(74) Mandataire: Claassen, Maarten Pieter
(86) Numéro de dépôt international: PCT/EP2018/061253
(87) Numéro de publication internationale: WO 2018/219579

(56) Documents cités:
- DE-A1-102014 215 473
- DE-A1-102015 110 239
- FR-A1- 2 976 091
- JP-A- 2008 083 816

## Description

La présente invention concerne de manière générale les véhicules automobiles, et plus précisément un procédé et un système d'assistance à la conduite en vue notamment d'alerter un conducteur d'un véhicule automobile sur le fait que son véhicule s'approche d'une barrière de péage.

De nombreux systèmes d'assistance à la conduite sont aujourd'hui proposés dans le but d'améliorer les conditions de sécurité de circulation, notamment sur autoroute. Le document JP2008083816A divulgue par exemple un tel système.

Parmi les fonctionnalités possibles, on peut citer notamment la régulation de vitesse ou ACC (initiales anglo-saxonnes mises pour Adaptive Cruise Control), l'arrêt et le redémarrage automatique du moteur du véhicule en fonction des conditions de trafic et/ou des signalisations (feux, stop, céder le passage...), l'assistance au maintien automatique de la trajectoire du véhicule dans sa voie de roulage comme proposée par les systèmes connus sous la terminologie anglo-saxonne de « Lane Keeping Assistance Systems, l'avertissement au conducteur de sortie de voie ou de franchissement involontaire de lignes (« Lane Departure Warning » en terminologie anglo-saxonne), l'assistance au changement de voie ou LCC (initiales anglo-saxonnes mises pour Lane Change Control), etc.

Les systèmes d'assistance à la conduite ont ainsi pour fonction générale d'alerter le conducteur d'une situation requérant sa vigilance et/ou de définir la trajectoire que doit suivre le véhicule pour arriver à une destination donnée, et permettre par suite de contrôler les organes de contrôle de la direction et de freinage du véhicule, pour que cette trajectoire soit effectivement suivie automatiquement. La trajectoire doit être comprise ici dans sa définition mathématique, c'est-à-dire comme étant l'ensemble des positions successives qui doivent être occupées par le véhicule au cours du temps. Ainsi, les systèmes d'assistance à la conduite doivent définir non seulement le chemin à emprunter, mais aussi le profil de vitesses à respecter. Pour ce faire, ils utilisent de nombreuses informations sur l'environnement immédiat du véhicule (présence d'obstacles tels que des piétons, de cycles ou autres véhicules motorisés, détection de panneaux de signalisation, configuration routière...), en provenance d'un ou plusieurs moyens de détection tels que caméras, radars, lidars, équipant le véhicule, ainsi que des informations liées au véhicule lui-même, telles que sa vitesse, son accélération, sa position donnée par exemple par un système de navigation type GPS.

La conduite sur autoroute offre de manière générale des conditions de circulation relativement sécurisées. Pour autant, dans le cas de véhicules à conduite purement manuelle, on constate que le conducteur d'une voiture peut relâcher sa vigilance, en particulier sur de longs parcours. De plus, même si le véhicule est équipé de systèmes offrant des fonctionnalités de conduite automatisées, telles que la régulation de vitesse, le maintien de trajectoire dans la voie et/ou l'aide au changement de voie, certaines situations particulièrement accidentogènes peuvent nécessiter l'intervention du conducteur, et/ou une inhibition automatique ou une modification de comportement des fonctionnalités de conduite automatisée.

Le fait qu'un véhicule soit sur le point d'arriver à une barrière de péage constitue l'une de ces situations accidentogènes à laquelle on s'intéresse plus précisément ici.

On connait du document WO 2008/142343 un système embarqué permettant d'alerter un conducteur d'un véhicule de la proximité d'une zone de péage en utilisant les données cartographiques d'un système embarqué de navigation par satellites, de type GPS. Plus précisément, le système extrait la position courante du véhicule par rapport à la localisation d'une zone de péage répertoriée dans les données cartographiques, et génère une alerte dès lors que la distance séparant le véhicule de la zone de péage devient inférieure à une distance de référence. Le fonctionnement du régulateur de vitesse du véhicule peut en outre être automatiquement inhibé le cas échéant.

Cependant, plusieurs défauts inhérents à ce système en limitent l'efficacité. En particulier, la cartographie actuelle est encore très imprécise et une zone de péage peut ne pas être répertoriée dans les données cartographiques. De plus, les données cartographiques ne sont pas toujours mises à jour. Une perte de couverture GPS est également possible. Enfin, le système de navigation de type GPS est imprécis, l'imprécision étant de l'ordre de la dizaine de mètres.

Un autre système, décrit dans le document US 2015/0070501, utilise la détection d'une information spécifique de présence d'une barrière de péage pour modifier (en particulier pour inhiber) le comportement d'une fonctionnalité de maintien du véhicule dans une voie de roulage. Selon l'enseignement de ce document, l'information spécifique indiquant que le véhicule s'approche d'une barrière de péage est soit une information reliée de façon univoque à la barrière de péage, par exemple la structure visuelle de la barrière de péage, soit une information dédiée exclusivement à la signalisation d'une barrière de péage, telle qu'un motif particulier ou une série dédiée de caractères peints sur la route ou présents sur un panneau de signalisation en amont de la barrière de péage. Dans les deux cas, l'information est modélisée et pré-mémorisée dans une base de données embarquée sur le véhicule. La détection de l'information s'effectue quant à elle par le traitement des images capturées par une caméra embarquée sur le véhicule permettant de reconnaitre la présence de l'information spécifique dans l'image par comparaison aux informations pré-mémorisées.

Ici encore, le système proposé souffre de limitations. Ainsi, la base de données embarquée doit être fréquemment mise à jour pour tenir compte de différentes barrières de péages. Par ailleurs, les motifs ou caractères spécifiques indiquant la présence de la barrière de péage peuvent subir des altérations (peinture effacée, panneaux recouverts de salissures...), et le traitement des images ne permettra pas dans ce cas de détecter leur présence.

La présente invention a pour but de pallier les inconvénients et limitations des systèmes connus en proposant un procédé et un système d'alerte de l'approche d'un véhicule à proximité d'une barrière de péage qui soit plus robuste et fiable.

Pour ce faire, l'invention a pour objet un procédé d'assistance à la conduite d'un véhicule automobile à l'approche d'une barrière de péage, comportant une étape de calcul d'une probabilité de présence d'une barrière de péage à partir d'au moins deux attributs de contexte routier déterminés à partir du véhicule automobile et définissant un contexte routier à l'avant dudit véhicule, lesdits attributs de contexte routier étant décorrélés de toute notion de barrière de péage.

Outre les caractéristiques principales qui viennent d'être mentionnées, le procédé selon l'invention peut comporter une ou plusieurs caractéristiques complémentaires parmi les suivantes:
- l'étape de calcul est avantageusement précédée d'une étape de traitement desdits au moins deux attributs de contexte routier consistant à: extraire des paramètres associés auxdits au moins deux attributs de contexte routier ; et dériver un indicateur représentatif de l'évolution temporelle de chaque paramètre extrait, chaque indicateur dérivé étant affecté d'un indice de confiance; la probabilité de présence d'une barrière de péage peut alors être calculée à partir des indices de confiance affectés à chaque indicateur dérivé ;
- lesdits au moins deux attributs de contexte routier font partie d'un ensemble d'attributs de contexte routier à l'avant du véhicule automobile comportant : les panneaux de limitation de vitesse ; les lignes de marquage au sol ; les ralentisseurs ou bandes rugueuses au sol ; les obstacles tels que les véhicules tiers ; l'espace navigable.
- lesdits paramètres associés font partie d'une première liste comportant: la vitesse limite extraite d'un panneau de limitation de vitesse ; la distance séparant latéralement le véhicule automobile d'un panneau de limitation de vitesse ; le nombre de lignes de marquage au sol ; le nombre de ralentisseurs ou bandes rugueuses au sol ; le nombre d'obstacles tels que les véhicules tiers, dont la vitesse diminue et/ou s'annule ; la taille de l'espace navigable;
- le procédé peut comporter en outre une étape de comparaison de la probabilité de présence calculée à un seuil de décision;
- une alerte sonore et/ou visuelle dans l'habitacle du véhicule automobile peut en outre être générée lorsque la probabilité de présence calculée est supérieure au seuil de décision.

L'invention a également pour objet un système d'assistance à la conduite d'un véhicule automobile à l'approche d'une barrière de péage, comportant un module de traitement embarqué apte à implémenter les étapes du procédé précédent.

Tout ou partie des attributs de contexte routiers utilisés pour le calcul de la probabilité de présence d'une barrière de péage sont par exemple délivrés par des modules de traitement d'images capturées par une caméra embarquée à l'avant du véhicule automobile.

En variante ou en combinaison, tout ou partie des attributs de contexte routiers utilisés pour le calcul de la probabilité de présence d'une barrière de péage sont délivrés par des modules de traitement de mesures issus d'un radar et/ou d'un lidar embarqué sur le véhicule automobile.

L'invention sera mieux comprise à la lecture de la description détaillée qui suit, faite en référence aux figures annexées, dans lesquelles :
- les figures 1 à 4 illustrent schématiquement en vue de dessus différents attributs de contexte routier auxquels on s'intéresse conformément à l'invention dans un une situation d'approche d'un véhicule automobile vers une barrière de péage ;
- la figure 5 représente une séquence d'étapes susceptibles d'être implémentées dans un système d'assistance à la conduite conforme à l'invention.

La présente invention repose sur le principe qu'il est possible d'établir la présence d'une barrière de péage avec une probabilité suffisante en analysant de façon générale le contexte routier à l'approche d'une telle barrière de péage, et en utilisant pour cette analyse diverses données d'entrée constituées par des détections d'au moins deux attributs de contexte routier a priori décorrélés de la notion de barrière de péage.

Les attributs de contexte routier auxquels il est fait référence ci-dessus sont choisis de préférence dans la liste d'attributs suivante :
- les panneaux de signalisation présents sur la route, et en particulier les panneaux de limitation de vitesse ;
- les lignes de marquage au sol ;
- les rails de sécurité ;
- les ralentisseurs ;
- les obstacles statiques ou dynamiques, en particulier les véhicules tiers ;
- l'espace navigable à l'avant du véhicule.

Ces attributs de contexte routier sont considérés comme décorrélés ou indépendants de la notion de barrière de péage en ce sens qu'ils font référence à des objets susceptibles d'être détectés (ou déterminés dans le cas de l'espace libre) à tout moment sur n'importe quel type de route, et ce, indépendamment du fait que l'on s'approche ou non d'une barrière de péage. En d'autres termes, leur détection seule ne permet pas de déduire la présence d'une barrière de péage.

Néanmoins, il est possible d'extraire de ces attributs de contexte routier des paramètres associés, lesquels paramètres ont la particularité d'évoluer chacun d'une façon relativement spécifique dans un contexte d'approche d'une barrière de péage.

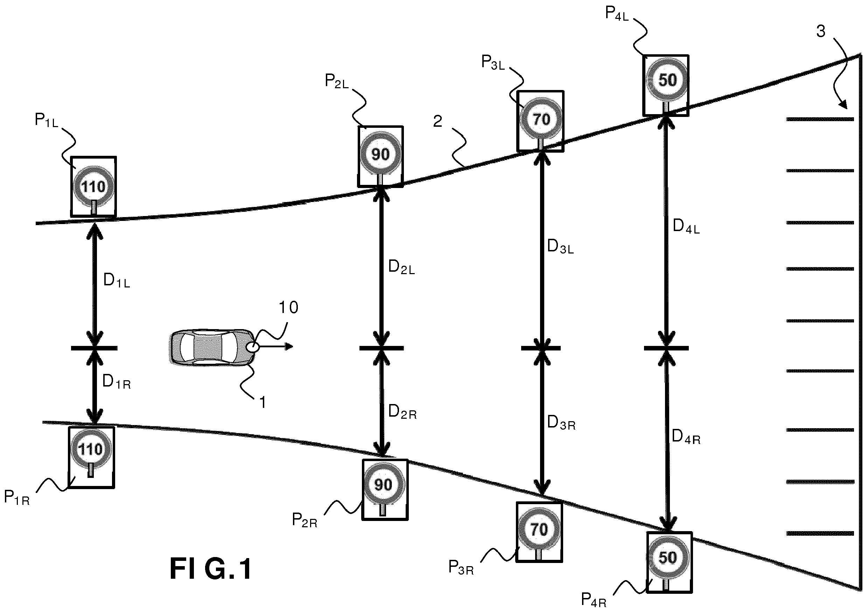

Ces règles d'évolution vont être explicitées en référence aux figures 1 à 4, lesquelles illustrent de façon schématique en vue de dessus un véhicule automobile 1 se déplaçant sur une portion de route 2 située juste en amont d'une barrière de péage 3. Dans la suite, on considère, à titre d'exemple non limitatif, que les attributs de contexte routiers précédemment listés peuvent être déterminés, de manière connue en soi et ne faisant pas l'objet de la présente invention, par l'utilisation de différents algorithmes de reconnaissance d'objets, à partir de traitements d'images capturées par une caméra 10 embarquée sur le véhicule automobile 1.

Sur la figure 1, on s'intéresse à la présence des panneaux de signalisation, et en particulier des panneaux de limitation de vitesse. Dans un contexte d'approche d'une barrière de péage, les panneaux de limitation de vitesse sont généralement présents, de préférence par paire, sur les deux bas-côtés de la route, et indiquent une vitesse limite de roulage qui va en décroissant au fur et à mesure que le véhicule automobile 1 s'approche de la barrière de péage 3. Ainsi, à titre d'exemple d'une configuration classique sur une autoroute française, une première paire P_{1L}, P_{1R} de panneaux de limitation de vitesse situés respectivement à gauche et à droite sur les bas-côtés de la route 2, et indiquant une vitesse limitée par exemple à 110 km/h, va pouvoir être détectée à partir des images capturées par la caméra 10 située à l'avant du véhicule automobile 1, suivie d'une deuxième paire P_{2L}, P_{2R} de panneaux de limitation de vitesse indiquant une vitesse limitée à 90 km/h, puis d'une troisième paire P_{3L}, P_{3R} de panneaux de limitation de vitesse indiquant une vitesse limitée à 70 km/h, suivie enfin d'une quatrième et dernière paire P_{4L}, P_{4R} de panneaux de limitation de vitesse indiquant une vitesse limitée à 50 km/h.

En outre, la distance séparant deux panneaux de limitation de vitesse d'une même paire augmente au fur et à mesure que l'on approche de la barrière de péage 3, du fait même de l'élargissement de la route. Il en résulte que tous les panneaux P_{1L}, P_{2L}, P_{3L} et P_{4L} qui vont être détectés par le véhicule automobile 1 à sa gauche sont situés à des distances respectives D_{1L}, D_{2L}, D_{3L} et D_{4L} par rapport au véhicule 1 qui augmentent (en supposant que le véhicule 1 suive sa voie de roulage). De même, tous les panneaux P_{1R}, P_{2R}, P_{3R} et P_{4R} qui vont être détectés par le véhicule automobile 1 à sa droite sont situés à des distances respectives D_{1R}, D_{2R}, D_{3R} et D_{4R} par rapport au véhicule 1 qui augmentent.

Ainsi, par la simple détection d'un premier attribut de contexte routier constitué par les panneaux de limitation de vitesse présents sur la route, il est possible d'extraire, en tant que paramètres associés, la valeur de vitesse limitée indiquée par chaque panneau détecté, ainsi que, dans le cas où ces panneaux de limitation sont présents par paire, la distance séparant chaque panneau détecté du véhicule automobile 1, puis de dériver :
- d'une part, un premier indicateur représentatif de l'évolution de la vitesse limitée, susceptible de correspondre à une situation d'approche d'une barrière de péage si cette évolution correspond à une décroissance progressive de la vitesse de limitation ;
- d'autre part, un deuxième indicateur représentatif de l'évolution de la distance séparant le véhicule automobile 1 de chaque panneau de limitation de vitesse détecté successivement, ici encore susceptible de correspondre à une situation d'approche d'une barrière de péage lorsque ce deuxième indicateur montre une augmentation de cette distance.

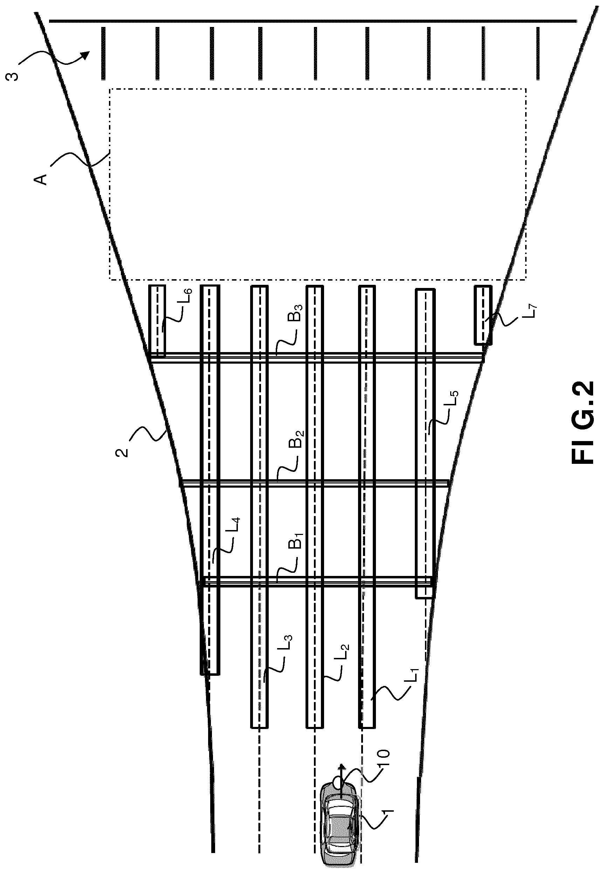

Dans le cas de la figure 2, on s'intéresse à un deuxième attribut de contexte routier constitué par les lignes de marquage au sol, et à un troisième attribut de contexte routier correspondant à la présence de ralentisseurs ou de bandes rugueuses. Dans un contexte d'approche d'une barrière de péage, le nombre de lignes de marquage présentes au sol va généralement augmenter au fur et à mesure que le véhicule automobile 1 s'approche de la barrière de péage 3. Dans l'exemple de la figure 2, un traitement connu en soi des images capturées par la caméra avant 10 permet d'extraire, au fur et à mesure du déplacement du véhicule 1, la présence des lignes de marquage L₁ à L_{7.} Ainsi, dans la situation représentée, le véhicule 1 commencera par détecter les trois lignes de marquage L₁, L₂, L₃, puis la ligne de marquage supplémentaire L₄, puis la ligne L₅, et enfin les lignes de marquage L₆ et L₇. Puis, le véhicule 1 peut traverser une zone A dans laquelle il n'y a plus du tout de ligne de marquage au sol.

Ainsi, à partir de la simple détection du deuxième attribut de contexte routier constitué par les lignes de marquage au sol, il est possible d'extraire à chaque instant le nombre de lignes de marquage détectées, puis de dériver un troisième indicateur représentatif de l'évolution de ce nombre, susceptible de correspondre à une situation d'approche d'une barrière de péage si cette évolution correspond à une augmentation du nombre de lignes de marquage au sol détectées, suivie éventuellement d'un retour à zéro (disparition des lignes dans la zone A).

Par ailleurs, des ralentisseurs ou des bandes rugueuses, tels que les ralentisseurs B₁, B₂ et B₃ de la figure 2, sont généralement présents au sol à l'approche d'une barrière de péage pour inciter les conducteurs à ralentir. Le comptage de ces ralentisseurs ou bandes rugueuses est en conséquence un quatrième indicateur possible susceptible de correspondre à une situation d'approche d'une barrière de péage, généré à partir de la simple détection du troisième attribut de contexte routier constitué par les ralentisseurs et/ou bandes rugueuses au sol.

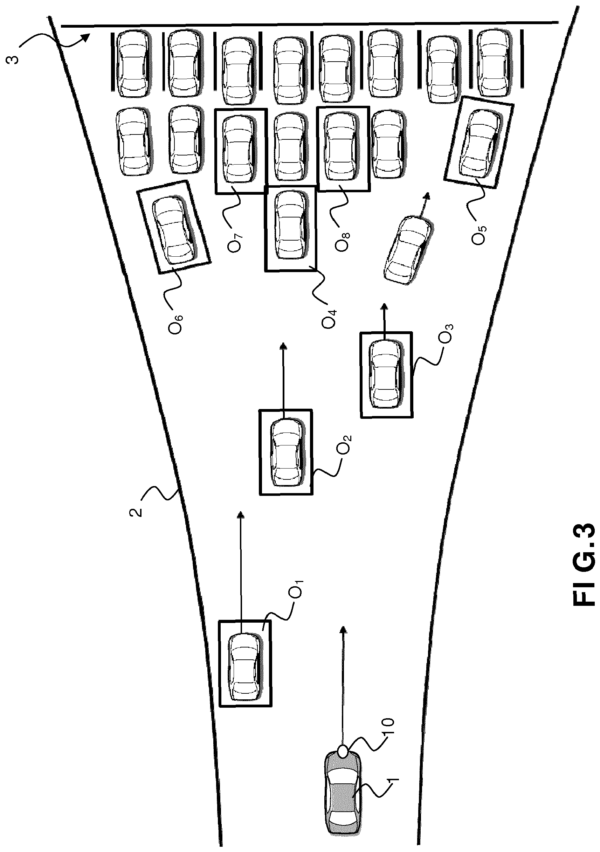

Dans le cas de la figure 3, on s'intéresse à un quatrième attribut de contexte routier constitué par les obstacles présents à l'avant du véhicule 1, tels que des véhicules tiers. Dans un contexte d'approche d'une barrière de péage, le nombre d'obstacles va généralement augmenter au fur et à mesure que le véhicule automobile 1 s'approche de la barrière de péage 3. Dans l'exemple de la figure 3, un traitement connu en soi des images capturées par la caméra avant 10 permet d'extraire au fur et à mesure du déplacement du véhicule 1, la présence des obstacles O₁ à O₈. Il convient de noter que la détection d'obstacles tels que les véhicules tiers peut également être réalisée à partir de mesures effectuées par un radar ou un capteur laser embarqués sur le véhicule automobile 1. Quels que soient le type de capteur et le traitement associé à la détection d'obstacle, chaque détection effectuée permet de connaître non seulement la position relative de l'obstacle détecté par rapport au véhicule automobile 1, mais aussi sa vitesse relative. Une particularité constatée dans un contexte d'approche d'une barrière de péage est que les véhicules situés à l'avant vont généralement tous ralentir (éventuellement s'arrêter).

Ainsi, à partir de la simple détection du quatrième attribut de contexte routier constitué par les obstacles mobiles à l'avant du véhicule 1, il est possible de dériver un cinquième indicateur représentatif de l'évolution du nombre de véhicules tiers ralentissant, voire étant à l'arrêt, susceptible de correspondre à une situation d'approche si cette évolution correspond à une augmentation du nombre de ces véhicules.

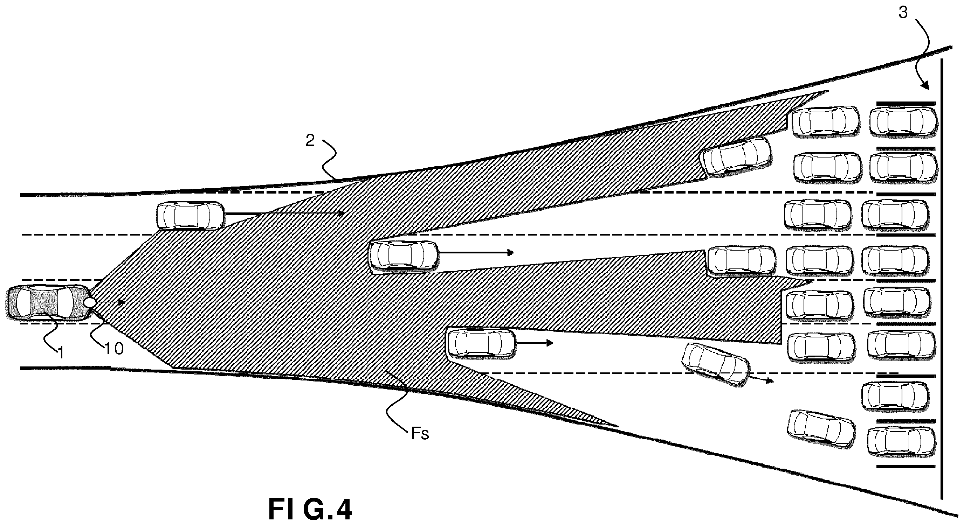

La figure 4 illustre enfin un cinquième attribut de contexte routier constitué ici par l'espace libre de conduite ou espace navigable situé à l'avant du véhicule automobile 1. L'espace navigable (« drivable space » en terminologie anglo-saxonne) correspond aux zones dans lesquelles le véhicule peut évoluer en sécurité. L'espace situé devant un véhicule est considéré comme « non navigable » dès lors que des obstacles statiques (bords de route, panneaux de signalisation, voitures en stationnement...) ou des obstacles dynamiques (véhicules roulants, piétons ...) sont présents. La détermination de l'espace navigable nécessite donc de savoir pour chaque point de l'espace total à l'avant du véhicule s'il est libre ou occupé. Il existe différentes façons aujourd'hui de déterminer l'espace navigable, par exemple en procédant à un traitement en temps réel d'images capturées par la caméra 10, afin d'extraire, par différents algorithmes de reconnaissance, différentes informations sur l'espace situé à l'avant du véhicule. Le traitement d'images permet de classifier chaque pixel d'une image selon trois catégories ou marqueurs selon que ce pixel doit être associé à la route, à un obstacle statique ou dynamique (voitures, piétons, barrières, panneaux de signalisation...), ou à un fond de paysage. Il est possible alors d'extraire une représentation géométrique à deux dimensions d'au moins un contour délimitant l'espace navigable à l'avant du véhicule. D'autres procédés d'extraction du contour de l'espace navigable existent également à partir d'ondes émises par un capteur (tel que radar, lidar ou capteur à ultrasons) qui vont se réfléchir sur des obstacles à une certaine distance. Le ou les contours extraits à partir des points d'impact obtenus délimitent la ou les zones pour lesquelles les ondes émises n'ont pas rencontré d'obstacles. La figure 4 illustre, sous la référence F_{S}, un exemple de contour d'espace navigable extrait à l'avant du véhicule 1.

Dans un contexte d'approche d'une barrière de péage telle que la barrière de péage 3, la taille de l'espace navigable de conduite F_{S} va généralement augmenter au fur et à mesure que le véhicule automobile 1 avance vers la barrière de péage 3, principalement du fait de l'élargissement de la route à cet endroit. En conséquence, l'extraction de l'attribut de contexte routier que constitue l'espace navigable de conduite est une donnée d'entrée supplémentaire possible à partir de laquelle on peut dériver un sixième indicateur représentatif de l'évolution de la taille de l'espace navigable de conduite, susceptible de correspondre à une situation d'approche si cette évolution correspond à une augmentation de cette taille.

Au vu de ce qui précède, on constate qu'aucun des cinq attributs de contexte routier décrits ci-dessus ne permet seul, une détection proprement dite de la barrière de péage. Néanmoins, en utilisant au moins deux de ces attributs de contexte routiers pour extraire des paramètres associés, en dérivant les indicateurs cités ci-dessus représentatifs de l'évolution temporelle de ces paramètre, et en analysant l'évolution de ces indicateurs au fur et à mesure que le véhicule automobile 1 avance, il est possible de calculer une probabilité de présence d'une barrière de péage.

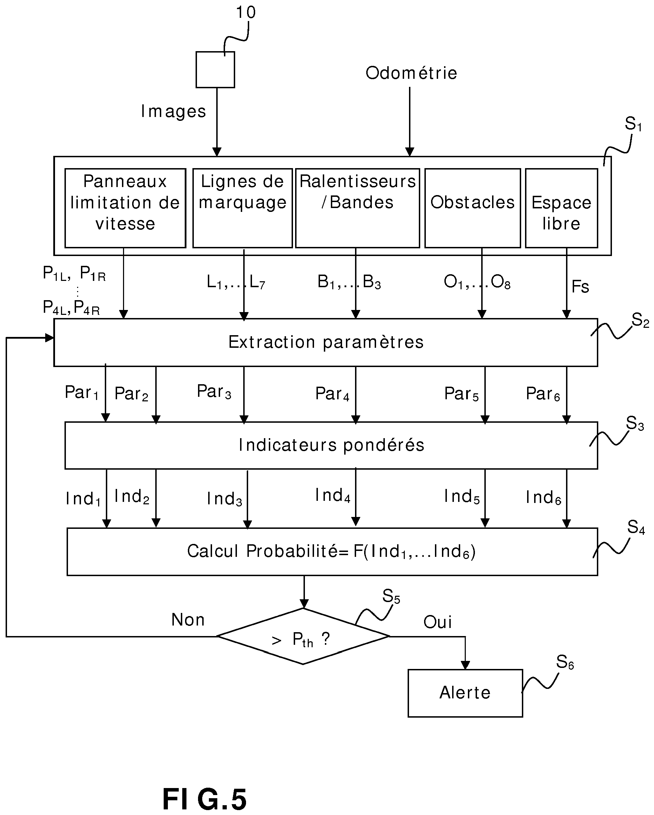

La figure 5 donne un exemple d'étapes de traitement susceptibles d'être implémentées par un système d'assistance à la conduite d'un véhicule automobile, tel que le véhicule automobile 1 des figures 1 à 4, à l'approche d'une barrière de péage. On suppose ici que le véhicule 1 est équipé d'une caméra frontale 10. Toutefois, il n'est pas indispensable que la caméra soit une caméra frontale. La caméra peut se trouver n'importe où. Une première étape S₁ correspond à la détermination de différents attributs de contexte routier, à partir de traitement d'images capturées par la caméra 10, ainsi que des paramètres odométriques (vitesse, accélération) du véhicule 1. Cette étape peut être implémentée par ailleurs dans le cadre d'autres fonctionnalités d'assistance à la conduite, telles que l'ACC, le maintien du véhicule dans sa voie de roulage, et/ou l'assistance au changement de voie. Dans cette figure, on a supposé, à titre d'exemple non limitatif, que tous les attributs de contexte routier pré-cités sont ici à disposition à l'issue de l'étape S₁.

L'étape suivante S₂ représente l'extraction des paramètres associés aux attributs de contexte. En particulier :
- les paramètres notés Par₁ et Par₂ correspondent respectivement à la vitesse limite extraite d'un panneau de limitation de vitesse P_{1L}, P_{1R}, ...P_{4L}, P_{4R} détecté à l'étape S₁, et à la distance latérale D_{1L}, D_{1R}, ...D_{4L}, D_{4R} séparant le véhicule 1 du panneau de limitation de vitesse détecté ;- le paramètre Par₃ correspond au nombre de lignes de marquage détectées à l'avant du véhicule automobile, telles que les lignes de marquage L₁ à L₇ de la situation routière représentée sur la figure 2 ;
- le paramètre Par₄ correspond au nombre de ralentisseurs ou bandes rugueuses au sol détectés à l'avant du véhicule automobile, tels que les ralentisseurs ou bandes rugueuses au sol B₁ à B₃ de la situation routière représentée sur la figure 2 ;
- le paramètre Par₅ correspond au nombre de véhicules tiers détectés à l'avant du véhicule automobile, tels que les obstacles O₁ à O₈ de la situation routière représentée sur la figure 3 ;
- le paramètre Par₆ correspond à la taille de l'espace navigable déterminé à l'avant du véhicule.

Lors de l'étape S₃, on dérive, de chaque paramètre Par₁ à Par₆, un indicateur Ind₁ à Ind₆ représentatif de l'évolution temporelle du paramètre. Un indice de confiance est affecté avantageusement à chaque indicateur de manière à donner un poids différent à l'analyse du contexte routier. Par exemple, un poids moins important peut être attribué aux indicateurs Ind₁ et Ind₂ (associés aux panneaux de limitation de vitesse, et/ou à l'indicateur Ind₃ associé aux lignes de marquage au sol, ), du fait que les panneaux de signalisation et/ou les lignes au sol peuvent être couverts de poussière ou partiellement voire totalement effacés. Les indices de confiance ou poids peuvent être paramétrés à l'avance dans le système. En variante, un processus d'apprentissage sur route, tel que celui mis en œuvre par un processus SVM (initiales anglo-saxonnes mises pour Support Vector Machine), un réseau bayésien, un réseau de neurones ou un algorithme de logique floue, peut permettre d'affiner ces indices de confiance en fonction des conditions rencontrées sur route.

L'étape S₄ représente l'étape de calcul de la probabilité de présence d'une barrière de péage, à partir de ces indices de confiance.

La probabilité de présence est alors comparée à un seuil de décision Pₜₕ (étape S₅), par exemple égal à 0,5. Ainsi, lorsque la probabilité calculée devient supérieure au seuil de décision, on peut conclure que le véhicule automobile approche d'une barrière de péage, et par exemple générer une alerte visuelle et/ou sonore à l'intérieur de l'habitacle du véhicule (étape S₆).

L'invention permet ainsi d'utiliser à une autre fin (ici la détection d'une situation d'approche d'une barrière de péage) des attributs de contexte routiers souvent déjà disponibles lorsque le véhicule est équipé d'autres fonctionnalités d'assistance à la conduite. Comme cela a été indiqué ci-dessus, l'invention peut être implémentée en utilisant seulement deux attributs de contexte routier. Néanmoins, un calcul plus robuste de la probabilité est obtenu en utilisant plus de deux attributs. L'intérêt étant que la fonctionnalité d'assistance reste opérationnelle même lorsque certains des attributs ne sont pas correctement détectés.

## Revendications

1. Procédé d'assistance à la conduite d'un véhicule automobile (1) à l'approche d'une barrière de péage (3), comportant une étape (S₄) de calcul d'une probabilité de présence d'une barrière de péage à partir d'au moins deux attributs de contexte routier déterminés à partir du véhicule automobile (1) et définissant un contexte routier à l'avant dudit véhicule, **caractérisé en ce que** lesdits attributs de contexte routier sont décorrélés d'une notion de barrière de péage en ce sens qu'ils font référence à des objets susceptibles d'être détectés ou déterminés dans le cas de l'espace libre à tout moment sur n'importe quel type de route, et ce, indépendamment du fait que l'on s'approche ou non d'une barrière de péage.

2. Procédé selon la revendication 1, **caractérisé en ce que** l'étape (S₄) de calcul est précédée d'une étape de traitement desdits au moins deux attributs de contexte routier consistant à:
- extraire (S₂) des paramètres (Par₁,...Par₆) associés auxdits au moins deux attributs de contexte routier ; et
- dériver (S₃) un indicateur (Ind₁,...Ind₆) représentatif de l'évolution temporelle de chaque paramètre extrait, chaque indicateur dérivé étant affecté d'un indice de confiance;
et **en ce que** la probabilité de présence d'une barrière de péage est calculée à partir des indices de confiance affectés à chaque indicateur dérivé.

3. Procédé selon l'une quelconque des revendications précédentes, **caractérisé en ce que** lesdits au moins deux attributs de contexte routier font partie d'un ensemble d'attributs de contexte routier à l'avant du véhicule automobile (1) comportant :
- les panneaux (P_{1L}, P_{1R}, ...P_{4L}, P_{4R}) de limitation de vitesse ;
- les lignes (L₁, ...L₇) de marquage au sol ;
- les ralentisseurs ou bandes rugueuses (B₁, B₂, B₃) au sol ;
- les obstacles (O₁, ...O₈) tels que les véhicules tiers ;
- l'espace navigable (Fs).

4. Procédé selon les revendications 2 et 3, **caractérisé en ce que** lesdits paramètres (Par₁,...Par₆) associés font partie d'une première liste comportant:
- la vitesse limite extraite d'un panneau (P_{1L}, P_{1R}, ...P_{4L}, P_{4R}) de limitation de vitesse ;
- la distance (D_{1L}, D_{1R}, ...D_{4L}, D_{4R}) séparant latéralement le véhicule automobile (1) d'un panneau (P_{1L}, P_{1R}, ...P_{4L}, P_{4R}) de limitation de vitesse ;
- le nombre de lignes (L₁, ...L₇) de marquage au sol ;
- le nombre de ralentisseurs ou bandes rugueuses (B₁, B₂, B₃) au sol ;
- le nombre d'obstacles (O₁, ...O₈) tels que les véhicules tiers, dont la vitesse diminue et/ou s'annule ;
- la taille de l'espace navigable (Fs).

5. Procédé selon l'une quelconque des revendications précédentes, **caractérisé en ce qu'**il comporte en outre une étape (S₅) de comparaison de la probabilité de présence calculée à un seuil (Pₜₕ) de décision.

6. Procédé selon la revendication 5, **caractérisé en ce qu'**il comporte en outre la génération (S₆) d'une alerte sonore et/ou visuelle dans l'habitacle du véhicule automobile (1) lorsque la probabilité de présence calculée est supérieure au seuil (Pₜₕ) de décision.

7. Système d'assistance à la conduite d'un véhicule automobile (1) à l'approche d'une barrière de péage (3), comportant un module de traitement embarqué **caractérisé en ce que** ledit module de traitement est apte à implémenter les étapes du procédé selon l'une quelconques des revendications 1 à 6.

8. Système d'assistance à la conduite selon la revendication 7, **caractérisé en ce que** tout ou partie des attributs de contexte routiers utilisés pour le calcul de la probabilité de présence d'une barrière de péage est délivré par des modules de traitement d'images capturées par une caméra (10) embarquée à l'avant du véhicule automobile (1).

9. Système d'assistance à la conduite selon l'une quelconque des revendications 7 ou 8, **caractérisé en ce que** tout ou partie des attributs de contexte routiers utilisés pour le calcul de la probabilité de présence d'une barrière de péage est délivrée par des modules de traitement de mesures issus d'un radar et/ou d'un lidar embarqué sur le véhicule automobile (1).

10. Programme d'ordinateur comprenant des instructions qui, lorsque le programme est exécuté par un ordinateur, conduisent celui-ci à mettre en œuvre le procédé selon l'une quelconque des revendications 1 à 6.

11. Support lisible par ordinateur comprenant des instructions qui, lorsqu'elles sont exécutées par un ordinateur, conduisent celui-ci à mettre en œuvre le procédé selon l'une quelconque des revendications 1 à 6.

## Patentansprüche

1. Verfahren zur Unterstützung des Fahrens eines Kraftfahrzeugs (1) bei Annäherung an eine Mautstelle (3), aufweisend einen Schritt (S₄) des Berechnens einer Wahrscheinlichkeit des Vorhandenseins einer Mautstelle ausgehend von mindestens zwei Straßenkontextattributen, die ausgehend von dem Kraftfahrzeug (1) bestimmt werden und einen Straßenkontext vor dem Fahrzeug definieren, **dadurch gekennzeichnet, dass** die Straßenkontextattribute in dem Sinne von einem Mautstellenkonzept dekorreliert sind, dass sie auf Objekte verweisen, die zu jeder Zeit auf jedem beliebigen Straßentyp detektiert oder im Falle des freien Raums bestimmt werden können, und dies unabhängig davon, ob man sich einer Mautstelle annähert oder nicht.

2. Verfahren nach Anspruch 1, **dadurch gekennzeichnet, dass** dem Schritt (S₄) des Berechnens ein Schritt des Verarbeitens der mindestens zwei Straßenkontextattribute vorangeht, der in Folgendem besteht:
- Extrahieren (S₂) der Parameter (Par₁, ...Par₆), die den mindestens zwei Straßenkontextattributen zugeordnet sind; und
- Ableiten (S₃) eines Indikators (Ind₁, ...Ind₆), der für die zeitliche Entwicklung jedes extrahierten Parameters repräsentativ ist, wobei jedem abgeleiteten Indikator ein Vertrauensindex zugewiesen wird;
und dadurch, dass die Wahrscheinlichkeit des Vorhandenseins einer Mautstelle ausgehend von den Vertrauensindizes berechnet wird, die jedem abgeleiteten Indikator zugewiesen werden.

3. Verfahren nach einem der vorhergehenden Ansprüche, **dadurch gekennzeichnet, dass** die mindestens zwei Straßenkontextattribute zu einer Menge von Attributen eines Straßenkontexts vor dem Kraftfahrzeug (1) gehören, die Folgendes aufweist:
- die Geschwindigkeitsbegrenzungsschilder (P_{1L}, P_{1R}, ...P_{4L}, P_{4R});
- die Markierungslinien (L₁, ...L₇) am Boden;
- die Bremsschwellen oder Rüttelstreifen (B₁, B₂, B₃) am Boden;
- die Hindernisse (O₁, ...O₈) wie Drittfahrzeuge;
- den befahrbaren Raum (Fs).

4. Verfahren nach den Ansprüchen 2 und 3, **dadurch gekennzeichnet, dass** die zugeordneten Parameter (Par₁, ...Par₆) Teil einer ersten Liste sind, die Folgendes aufweist:
- die Höchstgeschwindigkeit, die aus einem Geschwindigkeitsbegrenzungsschild (P_{1L}, P_{1R}, ...P_{4L}, P_{4R}) extrahiert wird;
- den Abstand (D_{1L}, D_{1R}, ...D_{4L}, D_{4R}), der das Kraftfahrzeug (1) seitlich von einem Geschwindigkeitsbegrenzungsschild (P_{1L}, P_{1R}, ...P_{4L}, P_{4R}) trennt;
- die Anzahl von Markierungslinien (L₁, ...L₇) am Boden;
- die Anzahl von Bremsschwellen oder Rüttelstreifen (B₁, B₂, B₃) am Boden; - die Anzahl von Hindernissen (O₁, ...O₈) wie Drittfahrzeuge, deren Geschwindigkeit abnimmt und/oder auf null sinkt;
- die Größe des befahrbaren Raums (Fs).

5. Verfahren nach einem der vorhergehenden Ansprüche, **dadurch gekennzeichnet, dass** es ferner einen Schritt (S₅) des Vergleichens der berechneten Wahrscheinlichkeit des Vorhandenseins mit einer Entscheidungsschwelle (Pₜₕ) aufweist.

6. Verfahren nach Anspruch 5, **dadurch gekennzeichnet, dass** es ferner das Erzeugen (S₆) einer akustischen und/oder visuellen Warnung im Fahrgastraum des Kraftfahrzeugs (1), wenn die berechnete Wahrscheinlichkeit des Vorhandenseins höher als die Entscheidungsschwelle (Pₜₕ) ist, aufweist.

7. System zur Unterstützung des Fahrens eines Kraftfahrzeugs (1) bei Annäherung an eine Mautstelle (3), aufweisend ein bordeigenes Verarbeitungsmodul, **dadurch gekennzeichnet, dass** das Verarbeitungsmodul geeignet ist, die Schritte des Verfahrens nach einem der Ansprüche 1 bis 6 zu implementieren.

8. System zur Unterstützung des Fahrens nach Anspruch 7, **dadurch gekennzeichnet, dass** alle oder einige der Straßenkontextattribute, die zur Berechnung der Wahrscheinlichkeit des Vorhandenseins einer Mautstelle genutzt werden, von Modulen zur Verarbeitung von Bildern geliefert werden, die von einer bordeigenen Kamera (10) vorne am Kraftfahrzeug (1) aufgenommen werden.

9. System zur Unterstützung des Fahrens nach einem der Ansprüche 7 oder 8, **dadurch gekennzeichnet, dass** alle oder einige der Straßenkontextattribute, die zur Berechnung der Wahrscheinlichkeit des Vorhandenseins einer Mautstelle genutzt werden, von Modulen zur Verarbeitung von Messungen, die von einem Radar und/oder Lidar an Bord des Kraftfahrzeugs (1) stammen, geliefert werden.

10. Computerprogramm umfassend Anweisungen, die, wenn das Programm von einem Computer ausgeführt wird, diesen dazu veranlassen, das Verfahren nach einem der Ansprüche 1 bis 6 durchzuführen.

11. Computerlesbarer Datenträger umfassend Anweisungen, die bei Ausführung durch einen Computer diesen dazu veranlassen, das Verfahren nach einem der Ansprüche 1 bis 6 durchzuführen.

## Claims

1. Driving assistance method for a motor vehicle (1) approaching a toll barrier (3), comprising a step (S₄) of calculating a probability of a toll barrier being present based on at least two road context attributes that are determined from the motor vehicle (1) and defining a road context ahead of said vehicle, **characterized in that** said road context attributes are decorrelated from a toll barrier concept in the sense that they refer to objects liable to be detected or determined in the case of free space at any time on any type of road, specifically independently of whether or not a toll barrier is being approached.

2. Method according to Claim 1, **characterized in that** the calculating step (S₄) is preceded by a step of processing said at least two road context attributes consisting in:
- extracting (S₂) parameters (Par₁,...Par₆) associated with said at least two road context attributes; and
- deriving (S₃) an indicator (Ind₁,...Ind₆) representative of the temporal evolution of each extracted parameter, each derived indicator being assigned a confidence index; and **in that** the probability of a toll barrier being present is calculated based on the confidence indices assigned to each derived indicator.

3. Method according to either one of the preceding claims, **characterized in that** said at least two road context attributes form part of a set of road context attributes ahead of the motor vehicle (1) comprising:
- speed limit signs (P_{1L}, P_{1R}, ...P_{4L}, P_{4R}) ;
- ground marking lines (L₁, ...L₇);
- speed bumps or rumble strips (B₁, B₂, B₃) on the ground;
- obstacles (O₁, ...O₈) such as other vehicles;
- the navigable space (Fs).

4. Method according to Claims 2 and 3, **characterized in that** said associated parameters (Par₁,...Par₆) form part of a first list comprising:
- the speed limit extracted from a speed limit sign (P_{1L}, P_{1R}, ...P_{4L}, P_{4R});
- the lateral distance (D_{1L}, D_{1R}, ...D_{4L}, D_{4R}) between the motor vehicle (1) and a speed limit sign (P_{1L}, P_{1R}, ...P_{4L}, P_{4R}) ;
- the number of ground marking lines (L₁, ...L₇) ;
- the number of speed bumps or rumble strips (B₁, B₂, B₃) on the ground;
- the number of obstacles (O₁, ...O₈) such as other vehicles whose speed is decreasing and/or stopping;
- the size of the navigable space (Fs).

5. Method according to any one of the preceding claims, **characterized in that** it furthermore comprises a step (S₅) of comparing the calculated probability of presence with a decision threshold (Pₜₕ).

6. Method according to Claim 5, **characterized in that** it furthermore comprises generating (S₆) an acoustic and/or visual alert in the passenger compartment of the motor vehicle (1) when the calculated probability of presence is greater than the decision threshold (Pₜₕ).

7. Driving assistance system for a motor vehicle (1) approaching a toll barrier (3), comprising an on-board processing module, **characterized in that** said processing module is able to implement the steps of the method according to any one of Claims 1 to 6.

8. Driving assistance system according to Claim 7, **characterized in that** all or some of the road context attributes used to calculate the probability of a toll barrier being present are delivered by modules for processing images captured by a camera (10) housed at the front of the motor vehicle (1).

9. Driving assistance system according to either one of Claims 7 and 8, **characterized in that** all or some of the road context attributes used to calculate the probability of a toll barrier being present are delivered by modules for processing measurements from a radar and/or a lidar on board the motor vehicle (1).

10. Computer program comprising instructions that, when the program is executed by a computer, prompt said computer to implement the method according to any one of Claims 1 to 6.

11. Computer-readable medium comprising instructions that, when they are executed by a computer, prompt said computer to implement the method according to any one of Claims 1 to 6.
